# EUROPEAN PATENT APPLICATION

(11) **EP 2 339 281 A2**
(43) Date of publication of application: **29.06.2011**
(21) Application number: 10275126.0
(22) Date of filing: 14.12.2010
(51) Int. Cl.: F28D 20/00

(54) **Thermal collection and storage systems**

(30) Priority: 15.12.2009 GB 0921857
(71) Applicant: Carbon Zero Limited, Liverpool L3 5TF (GB)
(72) Inventor: Bond, Damian, Oldham, Lothian OL13 9HJ (GB); Nangle, Douglas, Chipping Campden Greater London GL55 6Q (GB)
(74) Representative: Beckham, Robert William

(57) **Abstract**

A thermal storage system comprises:
at least one thermal collector (6) having first ducts therein for the transport of a heat collecting fluid;
a thermal storage device (1) having a container with a zeolite molecular sieve therein, the device incorporating a means to provide for unidirectional flow of water vapour on its expulsion from the zeolite molecular sieve and means to admit water vapour to the zeolite molecular sieve;
a one or more second fluid ducts in or around the container connected to the first ducts to provide a thermal path from the collector to the zeolite molecular sieve; a condenser to receive water vapour driven from the zeolite molecular sieve;
an evaporator to supply water vapour to the zeolite molecular sieve under reduced pressure when heat is demanded of the system;
the zeolite molecular sieve is heated by the thermal collecting fluid passing through said second ducts to drive water vapour from the zeolite molecular sieve and out of the container, and water vapour is admitted to into the zeolite molecular sieve under reduced pressure when the temperature when heat is demanded.

## Description

This invention relates to thermal collection and storage devices.

In PCT W02010/004302 a container is described with a zeolite molecular sieve therein acting as a thermal storage system in which heat is taken into the system and stored until released later when needed.

A specific solar panel described, as an example, is a parabolic collector, made perhaps of aluminium, coated with a thermally absorbing surface, such as black paint, and the thermal connection between the collector and zeolite is high thermal conductivity metal such as aluminium.

Under normal conditions, heating a zeolite to drive off water vapour as part of a thermal store requires temperature within the store to be raised to 200 0C and this cannot be achieved easily or cheaply from environmental heat sources such as solar or geothermal in cooler climates such as those found in Northern Europe or North America.

In a first embodiment therefore this invention a thermal storage system comprising a zeolite molecular sieve in a container coupled to a thermal collector wherein water vapour is desorbed from the zeolite molecular sieve by heating the sieve at a pressure below that of atmospheric pressure.

Preferably in thermal storage system according to the invention the zeolite molecular sieve is in a container containing a body of zeolite with thermally conducting fins extending substantially into the body of zeolite in which said thermally conducting fins are thermally connected to a heat source. In such a thermal storage system the zeolite molecular sieve is at a higher pressure after any resorption step than during any desorption step.

The storage system of this invention is particularly useful with a thermal collector that is a solar collector and desorption occurs under reduced pressure (compared to atmospheric pressure) to allow the desorption of zeolite to occur at temperatures achievable by solar thermal collectors. In such a system desorption can be at about 80°C.

In such a system the pressure in the various parts of the system can be cycled between low and high pressures to allow desorption of water vapour from the zeolite to occur at temperatures achievable by solar thermal collectors and adsorption of water vapour from the zeolite to occur at higher pressure to liberate heat at a higher temperature than that at which desorption occurs. At least 150°C is achievable during the adsorption stage.

In a thermal storage system according to the invention the pressure in the evaporator is preferably reduced to allow water to boil at low temperatures less than 50°C and low grade heat energy is supplied to the evaporator. By reducing the pressure in the evaporator to allow water to boil at low temperatures (say 5-50°C) and supplying low grade heat energy to the evaporator from an environmental source, such as external air outside a building in which the storage system is installed, the overall efficiency of the system can be improved, increasing the co-efficient of performance up to 2 times.

The thermal collector may, for example, be a geothermal heat collector or solar panel source.

In another embodiment a thermal storage system comprises at least one thermal collector having first ducts therein for the transport of a heat collecting fluid; a thermal storage device having a container with a zeolite molecular sieve therein, the device incorporating a means to provide for unidirectional flow of water vapour on its expulsion from the zeolite molecular sieve and means to admit water vapour to the zeolite molecular sieve; one or more second fluid ducts in or around the container connected to the first ducts to provide a thermal path from the collector to the zeolite molecular sieve; a condenser to receive water vapour driven from the zeolite molecular sieve; an evaporator to supply water vapour to the zeolite molecular sieve under reduced pressure when heat is demanded of the system.

The heat collecting fluid may be any suitable fluid, including gases.

Water is the cheapest most convenient fluid, but refrigerants and gases such as nitrogen are easily used.

The zeolite molecular sieve may be heated by the thermal collecting fluid passing through said second ducts to drive water vapour from the zeolite molecular sieve and out of the container and wherein water vapour is admitted into the zeolite molecular sieve when heat is demanded.

The thermal collector having first ducts may be a conventional water circulating solar collector such as the TUBO 12^{™} CPC tube collectors or PLANO 26^{™} flat plate collectors both marketed by Consolar GmbH of Frankfurt. However there are may other similar solar collectors on the market which using water as the thermal transport means in the same way. Alternatively, a parabolic mirror collector may be used focussing solar energy onto first ducts at the centre of the mirror, in some situations such a collector my raise the temperature of the heat collecting fluid considerably.

Conventionally such thermal collectors are coupled to a thermal store comprising a conventional insulated hot water cylinder connected to provide hot water to, say, a building.

Although cheap and simple to install such thermal collectors were not previously generally thought to be suitable for supplying heat to buildings. To achieve the desired desorption temperature the pressure in the container should be 0.2 bar or less.

In a further variant after resorption the pressure within the store to higher than that at which desorption occurs and is normally atmospheric pressure. In one embodiment the zeolite store, condenser, and ducting and valves there between are a hermetically sealed unit pressurised initially at 0.2 Bar or less.

In a variant on this latter embodiment a pump is disposed between the zeolite store and condenser to reduce pressure in the store on starting desorption and in addition means (such as an air valve) is provided to restore the pressure in the store to atmospheric pressure when resorption is complete.

Such a thermal storage system described above is normally a constituent of a heating system, but its use is not so limited and in particular it may at least be part of a Rankine cycle to generate electricity. As part of a Rankine cycle the zeolite heat storage cell would also contain sealed passageways for a refrigerant liquid to be heated by zeolite adsorption and be boiled to a high pressure gas. This gas refrigerant would then drive an expander such as a scroll or turbine. Once the gas has passed through the expander (driving an electrical generator) it would be cooled and condensed back into a liquid; the efficiency of such a heat engine is improved by extending the temperature range between the hot gas expansion and the cold gas compression regions.

Combining the zeolite thermal store with the Rankine cycle system provides two advantages. The evaporator unit in the zeolite system provides a cool source as the liquid boil and draws energy of evaporation from the liquid. Linking this to the condenser unit of the Rankine cycle improves the efficiency of the heat engine. At the same time, the waste heat in the exhaust of the Rankine cycle is supplied to the evaporator of the zeolite system, recycling the energy and improving the co-efficient of performance.

In many examples of thermal storage system according to the invention, the zeolite molecular sieve is supported in a metal matrix, comprising thermally conducting fins extending substantially though the body of the zeolite molecular sieve, with spines extending laterally from the spines into the body of the zeolite molecular sieve to ensure excellent thermal connection between the source of heat and the zeolite molecular sieve. Such a structure is called a "zeolite matrix".

In this specification "adsorb" refers to the adsorption of water vapour into the zeolite molecular sieve, "desorption" refers to the release of water vapour from the zeolite molecular sieve, during the adsorption phase heat is released from the zeolite molecular store and during the desorption phase the heat is taken into the zeolite providing the energy to expel the water and the energy is effectively stored until the next adsorption phase occurs.

The invention will now be described with reference to the accompanying drawings in which:

Figure 1 shows a schematic installation for a heating system according to the present invention; and

Figure 2 is a cross section showing in more detail inside of zeolite thermal store of figure 1.

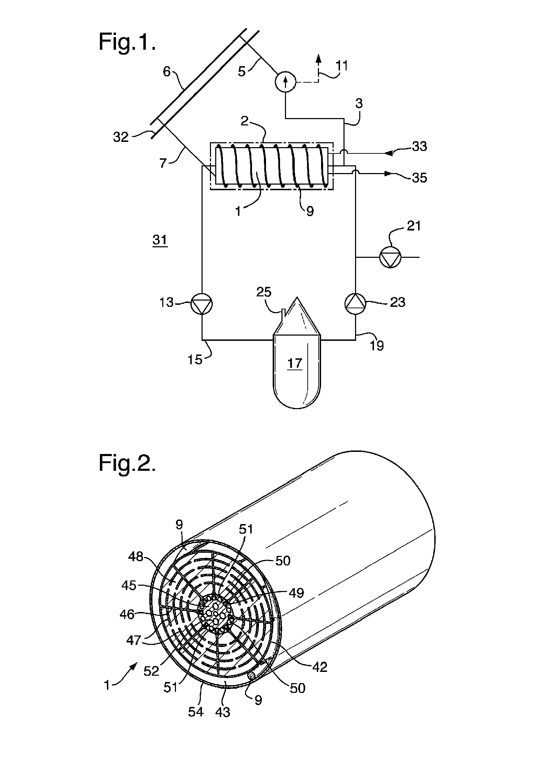

In figure 1 a zeolite thermal store 1, in a building 31, has a coil 9 wrapped around it through which a thermal transport fluid, water in this case, may flow. One end of the coil 9 is connected to a pump 4, whose operation may be controlled by a control means 11, depending on the circumstances this may be a timer, light sensor or a thermostat. The exit of the pump is connected via duct 5 to entry of a water circulating solar collector 6 on the roof 32 of the building. The exit of the solar collector 6 is connected via duct 7 to the other end of coil 9. Water circulating though the water circuit described by coil 9, duct 3, pump 4, duct 5, solar collector 6 duct 7 back to coil 9, will be heated by solar energy impinging on solar collector 6 and will release its energy to the zeolite thermal store 1.

When the external temperature drops pump 4 can be stopped by thermostat 11. To prevent heat loss externally to the coil 9 the thermal store 1 and coil 9 have thick lagging 2. The interior of zeolite thermal store 1 is connected through a one way valve 13 through pipe 15 to condenser/evaporator 17. The condenser/evaporator 17 is connected back to the zeolite thermal store by duct 19 and expansion valve 23.

The circuit of thermal store 1, valve 13, duct 15, condenser/evaporator 17, duct 19 and expansion valve 23 back to the thermal store 1 is hermetically sealed. Water, more than sufficient fully to be absorbed in the zeolite in the thermal store 1 is contained within the circuit.

The pressure within the system, with the zeolite fully charged, is reduced to 0.2Bar prior to final sealing. By so doing so the temperature at which the zeolite desorbs water can be reduced to from 200°C to as low as 80°C, within reason for the temperature likely to be present in coil 9 when operating with the kind of a solar collector described. The liquid in the evaporator will boil under low temp at low pressure, but needs to draw energy of evaporation from somewhere. Using energy from an air source (e.g. fan driven air flow taken from a source external to the building in which the any building in which the store is installed across the surface of the evaporator) provides this energy and prevents the water in the evaporator from freezing and this improves the co-efficient of performance (COP) of the thermal store up to a maximum of 2 times. Therefore the system can be designed to maximise the uptake of low grade heat (e.g. solar thermal to desorb under low pressure, with latent heat of evaporation supplied by air source around 8-10°C) and output heat at higher temperatures for domestic use (60°C for heating / water, 150°C for electricity via a Rankine cycle).

Alternatively valve 13 can be replaced by a pump/one way valve combination which will have the effect of reducing vapour pressure within the system when it is turned on such that the desorption temperature is reduced to 80°C. In this embodiment an air entry valve 21, closed at this stage of the cycle, is also provided in the duct 19 back to the zeolite store 1. An air vent 25 is also required in the condenser/evaporator to relieve excess pressure in the condenser evaporator when the pump is operating.

When heat is being supplied from the solar panel 6, pump 13 will be turned on reducing the vapour pressure within the thermal store 1 to allow zeolite within the thermal store to desorb water vapour at a lower temperature than usually the case. In effect this reaction stores heat within the thermal store. Useful heat can be extracted by the condensing of water vapour in the condenser. However the main heat extraction from the system is as a result of water vapour being admitted to the system from the evaporator as a result of the significantly reduced pressure in the thermal store as a result of original water vapour having been desorbed when coil 9 is providing heat.

As coil 9 cools as will happen as it becomes darker outside and the collector 6 ceases to provide heat, cold water is circulated through pipes 33 and 35 into and out of ducts in the thermal store 1 as described with reference to figure 2 (below) the temperature in the thermal store drops and any remaining water vapour therein is readsorbed by the zeolite creating a reduced pressure drawing low pressure/ low temperature from the condenser/evaporator 17 though one way expansion valve 23.

As water vapour is drawn from condenser/evaporator 17 into the store 1, adsorption within the zeolite takes place, liberating heat causing the store to heat. At reduced pressure in a hermetically sealed unit this adsorption takes place at about 60°C and the temperature within the store stabilises to that. This heat is extracted to circulating water in, for example, a central heating system. This circulating water enters and leaves the store by piped 33 and 35 which are coupled to ducts within the store itself as described below in figure 2.

However, if the valve 13 has been replaced by a pump/one way valve and air entry valve 21 is opened and the pump is turned off the pressure within the system will rise to atmospheric pressure and the temperature within the store on desorption will rise to 150°C.

In figure 2, the thermal store 1 comprises a cylindrical container made up of an inner wall 42 made of extruded aluminium sections. The ends (not shown) of the cylinder are closed by aluminium caps. The wall 42 is separated by a gap 43 from an insulating outer wall 44. Coil 9 is wrapped around the inner wall 42 and any remaining spaces between the inner wall and insulating outer wall 44 filled with insulating material such as rock wool. The outer wall 44 may be surrounded by further insulating materials. An extruded aluminium central core 45 has a plurality of radial aluminium fins 46 extruding to the inner wall 42.

Each fin 46 has a number of aluminium spines 47 extending the length of the cylinder and formed as arcs around the central core 45. The region between the inner wall 42 and the central core 45 is filled with a zeolite molecular sieve 48. The zeolite known as X13 is particularly efficient in this application. The configuration of the fins 46 and spines 47 makes for good heat transfer to the central core 45 and the zeolite 48, the spines 47 forming a fine mesh to contact the zeolite molecular sieve 48. It will be seen that the combination of zeolite 48, fins 46 and spines 47 forms a zeolite matrix. The central core itself has a number of slots 49 on its periphery in which the fins 46 are mounted.

Close to the surface of the core are a number of ducts 50 for water vapour. The ducts 50 have slots 51 to the zeolite molecular sieve 48, through which water vapour may pass. The ducts 10 are connected through the end caps of the zeolite store 1, on one side via a non-return valve 13 (figure 1) to a condenser 15 (figure 1) and on the other side via valve 23 (figure 1) to low-pressure evaporator 19 (figure 1).

A series of heat transfer pipes 52 run the length of the central core 45. Water is used as the heat transfer medium in this case. In this example the heat transfer pipes would connect to a hot water supply or central heating system via the ducts 33 and 35 shown in figure 1. But there is no reason why other heat transfer media should not be used.

During the day circulating water in coil 9, which has absorbed solar energy when passing through collector 6 (figure 1), heats the zeolite molecular sieve 48 forcing the adsorbed water in the zeolite out as water vapour (i.e. desorbs), through the slots 51 and ducts 50 out of the cylinder. This water vapour passes through a non- return valve to a condenser (not shown). Cool water is passed through the heat transfer pipes 52, cooling the interior of the cylinder. Any water vapour remaining in the cylinder is reabsorbed into the zeolite molecular sieve 48, creating a reduced pressure, even a vacuum. This low pressure draws water vapour through the ducts 50 and slots 51 into the zeolite molecular sieve 48.

As the water vapour is adsorbed into the zeolite molecular sieve with the zeolite releasing heat, this heat release gradually charges the zeolite with water until no more can be adsorbed, at which point all possible heat has been released from the zeolite. The heat thus released is transferred via the spines 47 and fingers 46 to the central core 45 where it heats water passing through the heat transfer pipes 52. It can be seen that heat taken from the battery both during cooling and discharge is available for use.

In the system described, when heat is demanded, circulation of warm thermal fluid in coil 9 is discontinued and water to be heated is passed into and out of the internal ducts 52 (figure 2) though pipes 33 and 35.

Although in this example the output is to a central heating system and or/hot water cylinder, the heated output from the zeolite store can be used to drive a scroll compressor to create rotational energy driving an electricity generator. It is calculated that in this configuration described 10m² of solar collector would provide to 5KWh of hot water and then a Rankine cycle device of the kind described in this paragraph would further convert that to 1 KWh of electricity with 4 KWh of hot water remaining for heating applications.

The system as described in figures 1 and 2 may be used in conjunction with a conventional solar collector supplying hot water to heat a hot water cylinder directly. Other ways of implementing the invention by use of alternative fluids and of varying the construction of the thermal store will be readily apparent to those of normal skill in the field. In the latter case, for example, the coil 9 around the store can be replaced by ducts or coils within the store to allow transfer of heat to the zeolite, the ducts 12 to allow heat to be collected from the system can be within the wall 42 for example, as can the ducts 10 and slots 11.

Water has been described as the heat transfer fluid passing through the first ducts in the thermal collector, fluids such as refrigerants can be used and gases such as N₂ are also suitable. Water has been described as the liquid that is adsorbed and desorbed from the zeolite matrix, but the system is not limited to water.

Zeolites will operate in the same manner with any polar gas, such as H₂0, N₂, CO₂ etc as well as fluoro-, chloro- and hydrocarbons.

The invention described, by using low pressure to adsorb the water vapour into the zeolite molecular sieve enables use of an environmental source of low grade heat to maximise efficiency of storage of solar thermal energy and to effectively to liberate it as higher grade heat for heating or electrical generation.

## Claims

1. A thermal storage system comprising a zeolite molecular sieve in a container coupled to a thermal collector wherein water vapour is desorbed from the zeolite molecular sieve by heating the sieve at a pressure below that of atmospheric pressure.

2. A thermal storage system according to claim 1 wherein the zeolite molecular sieve is in a container containing a body of zeolite with thermally conducting fins extending substantially into the body of zeolite in which said thermally conducting fins are thermally connected to a heat source.

3. A thermal storage according to claim 1 or 2 wherein the zeolite molecular sieve is at a higher pressure after any adsorption step than during any desorption step.

4. A thermal storage system according to claim 1, 2 or 3 in which adsorption occurs under reduced pressure (compared to atmospheric pressure) to allow the desorption of zeolite to occur at temperatures achievable by solar thermal collectors.

5. A thermal storage system according to claim 4 in which adsorption is at about 80°C.

6. A thermal storage system according to any preceding claim, **characterised in that** the pressure in the various parts of the system are cycled between low and high pressures to allow desorption of water vapour from the zeolite to occur at temperatures achievable by solar thermal collectors and adsorption of water vapour from the zeolite to occur at higher pressure to liberate heat at a higher temperature than that at which desorption occurs.

7. A thermal storage system according to claim 6 in which said higher temperature is at least 150°C.

8. A thermal storage system according to any preceding claim **characterised in that** where the pressure in the evaporator is reduced to allow water to boil at low temperatures less than 50°C and low grade heat energy is supplied to the evaporator.

9. A thermal storage and release system according to any preceding claim
wherein the pressure in the container is 0.2 bar or less.

10. A thermal storage and release system according to any preceding claim
wherein the pressure in the container is 0.2 Bar or less during desorption and a higher pressure after adsorption.

11. A thermal storage and release system according to claim 11 wherein the pressure in the container is atmospheric pressure after adsorption.

12. A thermal storage system and release system according to any preceding claim in which the zeolite store, and condenser and ducting and valves there between are a hermetically sealed unit pressurised initially at 0.2Bar or less.

13. A thermal storage system according to any preceding claim in which a pump is disposed between the zeolite store and condenser to reduce pressure in the store on starting desorption.

14. A thermal storage system according to claim 14 including means to restore the pressure in the store to atmospheric pressure when resorption is complete.

15. A thermal storage system according to any preceding claim **characterised in that** heat released from the thermal store is used at least in part in a Rankine cycle to generate electricity.
